# EUROPEAN PATENT APPLICATION

(11) **EP 2 525 102 A2**
(43) Date of publication of application: **21.11.2012**
(21) Application number: 12168111.8
(22) Date of filing: 15.05.2012
(51) Int. Cl.: F04D 27/00

(54) **Air volume adjustment device for air conditioner**

(30) Priority: 18.05.2011 JP 2011111749
(71) Applicant: Mitsubishi Heavy Industries, Tokyo 108-8215 (JP)
(72) Inventor: Takeuchi, Nobuyuki, Minato-ku Tokyo 108-8215 (JP); Nakamura, Takanori, Minato-ku Tokyo 108-8215 (JP); Inaba, Takashi, Minato-ku Tokyo 108-8215 (JP); Komiya, Shinichi, Minato-ku Tokyo 108-8215 (JP)
(74) Representative: Intès, Didier Gérard André

(57) **Abstract**

There is provided an air volume adjustment device for an air conditioner that can rapidly and accurately adjust an air volume by determining an external static pressure by the unit itself so that the rated air volume can be achieved with the external static pressure. An air volume adjustment device for an air conditioner of a type in which a heat exchanger and a DC fan motor (12) are housed in a unit body and air whose temperature is controlled in a heat exchanger is blown into a room through an air outlet duct connected to the unit body, the air volume adjustment device comprising: an air volume adjustment circuit (25) configured to: drive the DC fan motor (12) at two predefined rotational speeds; read, while driving, a motor output value output from a motor control circuit side (22) to the DC fan motor (12); determine an external static pressure from a difference between motor output values at the two rotational speeds; and set a rotational speed of the DC fan motor (12) so that a rated air volume is achieved based on the external static pressure and from a rotational speed table for each static pressure setting.

## Description

### Technical Field

The present invention relates to an air volume adjustment device for an air conditioner of a type that blows air whose temperature is controlled into a room through a duct connected to a unit body.

### {Background Art}

AC motors have been adopted as fan motors in a duct-type air conditioner which is configured to blow air into a room through a duct disposed, for example, inside of the ceiling, and in which the temperature of the air has been controlled in a unit body having a heat exchanger and a fan housed therein. In this case, since the fan is driven with a constant power, the stack loss varies according to the length, diameter, shape, or the like, of the duct. Therefore, there has been no way to grasp an external static pressure determined thereby. Accordingly, in old buildings or other constructions where ducts are appropriated as-is in installation of an air conditioner, if the external static pressure is large, the air volume of the air conditioner is reduced, resulting in performance decline. On the other hand, where the external static pressure is small, the air volume becomes too large, thereby degrading the draft. These have been problems.

Then, PTL 1 discloses a DC fan motor for constant air volume control for a ventilator that can drive with an instructed constant air volume even with varied pressure losses depending on the length, diameter, shape, or the like, of a duct, while being able to control the constant air volume without providing a special sensor or the like to detect the air volume.

The DC fan motor has storage means for storing rotational speeds corresponding to voltages applied to a DC motor for providing an air volume instructed by air volume instruction means that instructs the air volume, and voltage control means that compares the actual rotational speed of the DC motor detected by the rotational speed detection means and a prescribed rotational speed stored in the storage means and corresponding to both of the present instructed air volume and the applied voltage, and controls the voltage applied to the DC motor so that the actual rotational speeds becomes equal to the prescribed rotational speed.

### {Citation List}

### {Patent Literature}

{PTL 1}
Publication of Japanese Patent No. 3012721

### {Summary of Invention}

### {Technical Problem}

However, the device disclosed in PTL 1 starts driving by applying voltage set in advance to the DC motor; compares the actual rotational speed Na of the motor detected by the rotational speed detection means with a prescribed rotational speed Nma corresponding to both of the present instructed air volume Qm and the applied voltage Va, stored in the storage means; and repeatedly drives by increasing and decreasing the voltage applied to the motor until the actual rotational speed Na becomes equal to the prescribed rotational speed Nma. By performing the above, the device achieves the instructed air volume, thereby making it possible to perform driving with a constant air volume. Due to the above procedure, the adjustment by the device takes a time, and because the device merely performs the control of the applied voltage such that the actual rotational speed becomes equal to the prescribed rotational speed, there have been problems in absorbing variations in the voltage of the control circuit component, a power supply voltage, and a motor instruction voltage, and in accurately adjusting to a constant air volume, or the like.

The present invention is made in view of the above-described circumstances, and an object of the present invention is to provide an air volume adjustment device for an air conditioner that can rapidly and accurately adjust the air volume by determining, by the unit itself, the external static pressure that varies according to the length, diameter, shape, or the like, of the duct so as to achieve a rated air volume with such an external static pressure.

### {Solution to Problem}

In order to solve the above-described problems, an air volume adjustment device for an air conditioner of the present invention adopts solutions stated in the following.
That is, an air volume adjustment device for an air conditioner according to one aspect of the present invention is an air volume adjustment device for an air conditioner of a type in which a heat exchanger and a DC fan motor are housed in a unit body and air whose temperature is controlled in the heat exchanger is blown into a room through an air outlet duct connected to the unit body, the air volume adjustment device including: an air volume adjustment circuit configured to: drive the DC fan motor at two predefined rotational speeds; read, while driving, a motor output value output from a motor control circuit side to the DC fan motor; determine an external static pressure from a difference between motor output values at the two rotational speeds, and set a rotational speed of the DC fan motor so that a rated air volume is achieved based on the external static pressure and from a rotational speed table for each static pressure setting.

According to the above-described aspect, the device has an air volume adjustment circuit configured to: drive the DC fan motor at two predefined rotational speeds; read, while driving, a motor output value output from a motor control circuit side to a DC fan motor; determine an external static pressure from a difference between motor output values at the two rotational speeds, and set a rotational speed of the DC fan motor so that a rated air volume is achieved based on the external static pressure and from a rotational speed table for each static pressure setting. Therefore, it is possible to rapidly adjust the air volume by determining an external static pressure by the unit itself from a difference between motor output values with the DC fan motor driven at two predefined rotational speeds after the installation of the air conditioner, and setting the rotational speed of the DC fan motor based on the external static pressure and the rotational speed table for each static pressure setting so that the rated air volume is achieved. Accordingly, it is possible to perform driving while securing the instructed air volume of the air conditioner, and prevent performance decline due to the reduction in the air volume where the external static pressure is high and the draft caused by increase in the air volume where the external static pressure is low. Moreover, since the external static pressure is determined from the difference between motor output values at the two rotational speeds, variations in the voltage of the circuit component at the controller side, power supply voltage or the motor output value can be absorbed to accurately adjust the air volume.

Further, in the air volume adjustment device for an air conditioner according to the above-described aspect, the air volume adjustment circuit includes: driving instruction means that drives the DC fan motor at two predefined rotational speeds A and B; calculation means that reads the motor output value output from the motor control circuit to the DC fan motor according to the instruction from the driving instruction means and calculates a difference between the motor output values; determination means that determines an external static pressure based on a determination table and from the difference between the motor output values calculated by the calculation means; rotational speed setting means that sets the rotational speed of the DC fan motor based on the external static pressure and from the rotational speed table for each static pressure setting so that the rated air volume is achieved; and storage means that stores data including the determination table and the rotational speed table for each static pressure setting.

According to the above-described aspect, the air volume adjustment circuit includes: driving instruction means that drives the DC fan motor at two predefined rotational speeds A and B; calculation means that reads the motor output value output from the motor control circuit to the DC fan motor according to the instruction from the driving instruction means and calculates a difference between the motor output values; determination means that determines an external static pressure based on a determination table and from the difference between the motor output values calculated by the calculation means; rotational speed setting means that sets the rotational speed of the DC fan motor based on the external static pressure and from the rotational speed table for each static pressure setting so that the rated air volume is achieved; and storage means that stores data including the determination table and the rotational speed table for each static pressure setting. Therefore, it is possible, after the installation of the air conditioner, to drive the DC fan motor with two predefined rotational speeds A and B according to the instruction by the driving instruction means, read the actual motor output value, and calculate the difference between the output values by the calculation means, and determine an external static pressure from the value by the determination means, and set the rotational speed of the DC fan motor by the rotational speed setting means based on the external static pressure and from the rotational speed table for each static pressure setting so that the rated air volume is achieved. Therefore, the external static pressure that varies according to the length, diameter, shape, or the like, of the duct can be determined by the unit itself, and the air volume can rapidly and accurately be adjusted so that the rated air volume can be achieved with the external static pressure.

Further, in the air volume adjustment device for an air conditioner of the above-described aspect, the output value output from the motor control circuit to the DC fan motor is determined to be rotational speed instruction voltages VspA and VspB, and the calculation means reads the rotational speed instruction voltages VspA and VspB and calculates the difference ΔVsp therebetween, and the determination means determines an external static pressure on a side of the air outlet duct based on ΔVsp calculated by the calculation means, and the rotational speed setting means has a function to set the rotational speed of the DC fan motor based on the external static pressure and from the rotational speed table for each static pressure setting.

According to the above-described aspect, the output value output from the motor control circuit to the DC fan motor is determined to be rotational speed instruction voltages VspA and VspB, and the calculation means reads the rotational speed instruction voltages VspA and VspB and calculates the difference ΔVsp therebetween, and the determination means determines an external static pressure based on ΔVsp calculated by the calculation means, and the rotational speed setting means has a function to set the rotational speed of the DC fan motor based on the external static pressure and from the rotational speed table for each static pressure setting. Therefore, it is possible, at normal operation, to read the rotational speed instruction voltages VspA and VspB at two rotational speeds corresponding to the outputs values (instruction values) output to the DC fan motor from the motor control circuit, calculate the difference ΔVsp therebetween, and from the value, determine by the unit itself the external static pressure, set the rotational speed of the DC fan motor corresponding thereto, based on the external static pressure. Therefore, it is not necessary to repeat driving by increasing and decreasing the applied voltage, and it is possible to comparatively easily and rapidly determine the external static pressure, and accurately adjust the air volume so as to achieve the rated air volume with the external static pressure.

### {Advantageous Effects of Invention}

According to the present invention, it is possible to rapidly adjust the air volume by determining an external static pressure by the unit itself from a difference between actual motor output values of the DC fan motor driven with two predefined rotational speeds after the installation of the air conditioner, and setting the rotational speed of the DC fan motor based on the external static pressure and from the rotational speed table for each static pressure setting so that the rated air volume is achieved. Accordingly, it is possible to perform driving while securing the instructed air volume of the air conditioner, and prevent performance decline due to the reduction in the air volume where the external static pressure is high and the draft caused by increase in the air volume where the external static pressure is low. Moreover, since the external static pressure is determined from the difference between motor output values acquired at two rotational speeds, variations in the voltage of the circuit component at the controller side, power supply voltage, the motor output value, or the like, can be absorbed to accurately adjust the air volume.

### {Brief Description of Drawings}

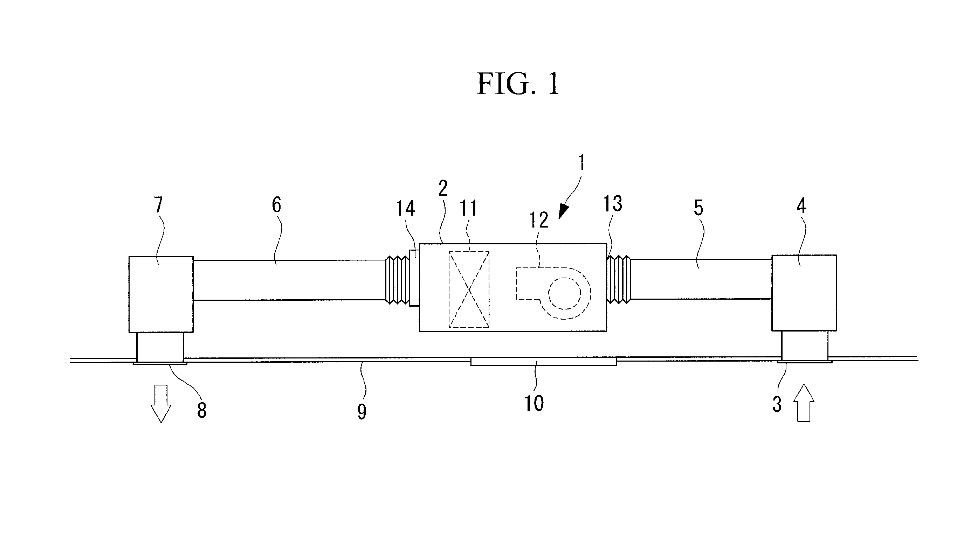

### {Fig. 1}

Figure 1 is a schematic side-view showing one exemplary installation state of a duct-type air conditioner according to one embodiment of the present invention;

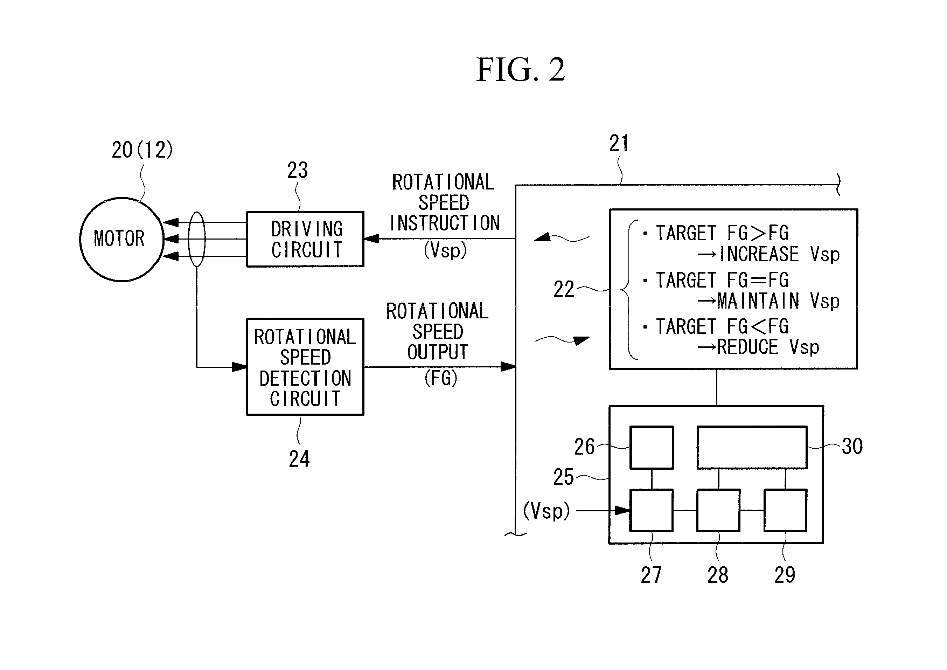

### {Fig. 2}

Figure 2 is a control circuit diagram of the DC fan motor of the duct-type air conditioner shown in Figure 1;

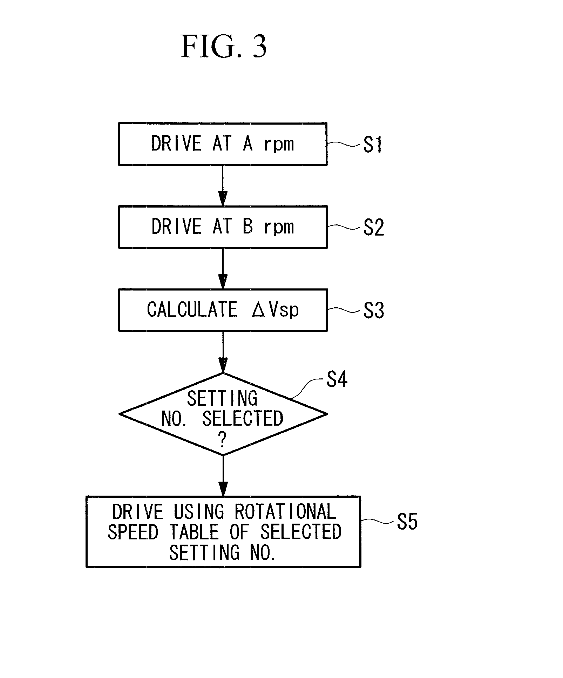

### {Fig. 3}

Figure 3 is a flowchart showing the control at a time of air volume adjustment according to the control circuit diagram of the DC fan motor shown in Figure 2;

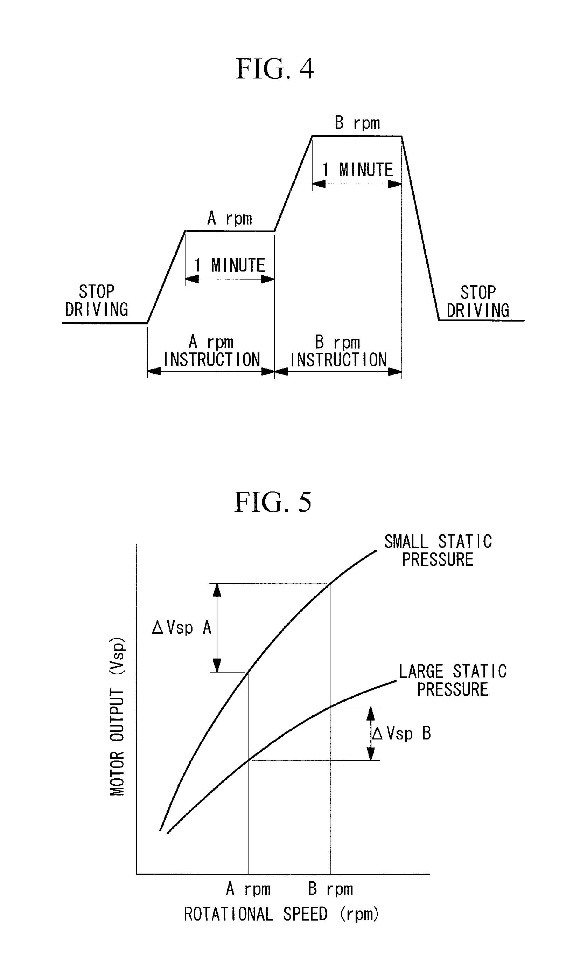

### {Fig. 4}

Figure 4 is a chart showing timings of a revolution instruction to the DC fan motor at the time of air volume adjustment;

### {Fig. 5}

Figure 5 is a graph showing a relation among the rotational speed of the DC fan motor, the motor output (Vsp) and the static pressure at the time of air volume adjustment; {Fig. 6}
Figure 6 shows one example of a determination table for selecting a static pressure setting No from the difference of the motor outputs (Vsp) at the time of air volume adjustment; and

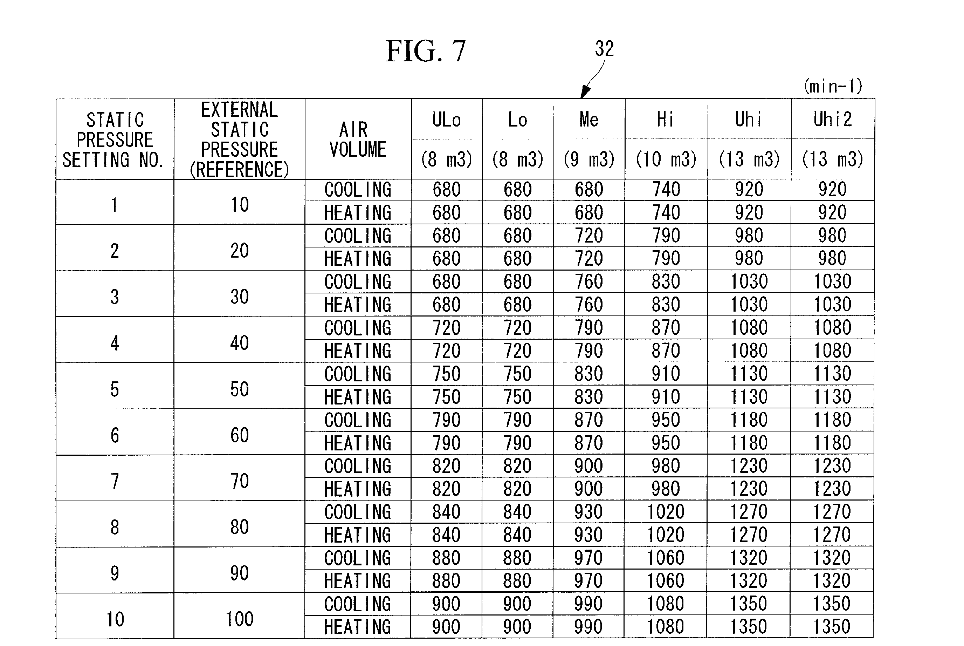

### {Fig. 7}

Figure 7 shows one example of a table of rotational speed for each static pressure setting employed for setting the rotational speed of the DC fan motor at the time of air volume adjustment.

### {Description of Embodiments}

Hereinafter, one embodiment of the present invention will be described with reference to Figures 1 to 7.
Figure 1 is a schematic side-view showing one exemplary installation state of a duct-type air conditioner according to one embodiment of the present invention, and Figure 2 shows a control circuit diagram of the DC fan motor. The present embodiment illustrates a duct-type air conditioner embedded in the ceiling as one example of the duct-type air conditioner.
A unit body 2 of this duct-type air conditioner 1, as shown in Figure 1, is configured to be installed so as to be hanged in the ceiling via a plurality of hanging bolts provided in the vertical direction on a beam or the like of the building. Drawings for an outside unit to be installed outside are omitted.

This duct-type air conditioner 1 is configured to blow the air into a room through an air outlet duct 6, an air outlet unit 7 and an air outlet grille 8, or other elements, after cooling or heating in-room air sucked from the inside of a room through an air inlet grille 3, a noise reduction chamber 4 and an air inlet duct 5, by exchanging heat with a refrigerant. The length, diameter, shape, or the like, of the air outlet duct 6 are variously changed depending on the location of the air outlet unit 7, or other factors. The ceiling face 9 is provided with an access hole 10 to check or perform maintenance of the unit body 2 of the duct-type air conditioner 1.

The unit body 2 is configured to have a box shape, and includes thereinside an inside heat exchanger 11 that exchanges heat between the refrigerant and the in-room air, a DC fan motor 12 including a plurality of pairs of sirocco fans that circulate in-room air and a DC motor, a drain pan that receives drain water generated in the inside heat exchanger 11, a drain pump that discharges drain water having accumulated in a drain pan to the outside and so on (drawings for the drain pan and the drain pump are omitted). Further, on the outside of the device, an air inlet 13 and an air outlet 14 to which the air inlet duct 5 and the air outlet duct 6 are connected are provided on the front and rear sides.

The DC fan motor 12, as shown in Figure 2, is configured such that the DC motor 20 is driven to revolve through a driving circuit 23 based on a motor output value output from the motor control circuit 22 of the controller (control substrate) 21 (for example, rotational speed instruction voltage Vsp), and the rotational speed is detected by a rotational speed detection circuit 24, and by feeding back the output FG from the rotational speed detection circuit 24 to the motor control circuit 22 of the controller 21, the target value (target FG) and the rotational speed output FG are compared to adjust the output value (rotational speed instruction voltage Vsp) to the DC motor 20 so that the rotational speed of the DC fan motor 12 becomes the target FG.

Further, in the controller 21, an air volume adjustment circuit 25 that adjusts the air volume (rotational speed) of the DC fan motor 12 corresponding to the external static pressure determined according to a pressure loss that varies mainly according to the length, diameter, the shape, or the like, of the air outlet duct 6, is provided so that rated air volume is achieved even when the external static pressure varies.

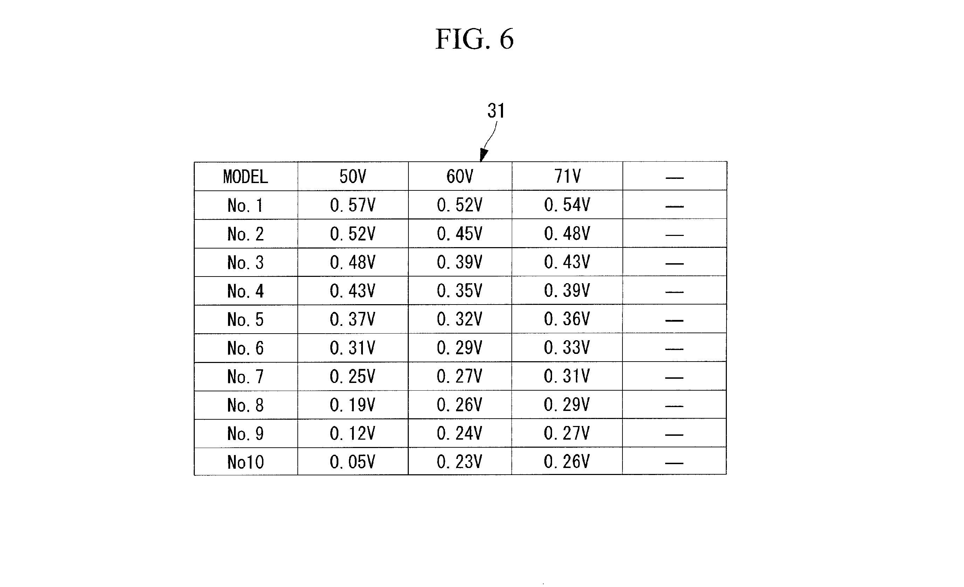

This air volume adjustment circuit 25 includes driving instruction means 26 that drives a DC fan motor 12 (DC motor 20) with two predefined rotational speeds A and B; calculation means 27 that reads a motor output value output to the DC motor 20, in other words, the rotational speed instruction voltages VspA, VspB through the motor control circuit 22, according to an instruction from the driving instruction means 26, and calculates difference of motor output values ΔVsp (= VspB - VspA); determination means 28 that determines an external static pressure on the side of the air outlet duct 6 from the difference of the motor output values ΔVsp calculated by the calculation means 27 and based on the determination table 31 (see Figure 6), and rotational speed setting means 29 that sets the rotational speed of the DC fan motor 12 so that a rated air volume is achieved based on the external static pressure and from the rotational speed table 32 for each static pressure setting (see Figure 7); and storage means 30 that stores data including the above-described determination table 31, and rotational speed table 32 for each static pressure setting or the like.

Further, the air volume adjustment circuit 25 first drives the DC fan motor 12 according to an instruction from the driving instruction means 26 in step S1 for several minutes with rotational speed A rpm set in advance, as shown in Figure 3. Second, in step S2, the air volume adjustment circuit 25 drives the DC fan motor 12 with the rotational speed B rpm set in advance for several minutes. In this case, the DC fan motor 12 is driven in a perflation mode. Figure 4 shows a timing chart of this case, in which a fan motor Duty is sampled for 1 minute before completion of driving of the motor initiated according to respective instructions to drive the motor with A rpm and B rpm.

The fan motor Duty at the two respective rotational speeds A rpm and B rpm is sampled by reading ΔVspA and ΔVspB based on the graph showing the relation among the rotational speed (rpm) of the DC fan motor 12, the motor output (Vsp) and the static pressure, as shown in Figure 5. The calculation means 27, in step S3, reads ΔVspA and ΔVspB on Figure 5 and calculates the difference ΔVsp (ΔVsp = ΔVspB - ΔVspA).

In step S3, when the difference ΔVsp between the motor output values (ΔVspA and ΔVspB) is calculated, the process proceeds to step S4. Here, the determination means 28 uses an calculation value ΔVsp calculated by the calculation means 27, to determine the external static pressure of the air conditioner 1, based on the determination table for the static pressure setting No according to the motor output difference (ΔVsp) for each type of the device, for example shown in Figure 6 and stored in the storage means 30, and by selecting the static pressure setting No therefrom.

When in step S4 the static pressure setting No is selected and the external static pressure is determined, the process proceeds to step S5. Here, based on the rotational speed table 32, stored in the storage means 30, for each static pressure setting as shown in Figure 7 for example, the rotational speed setting means 29 sets the rotational speed of the DC fan motor 12 so that the rated air volume is achieved from the rotational speed table 32 for each static pressure setting with a selected static pressure No. For example, in the types of models shown in Figure 7, in the case where the static pressure setting No. 3 is selected and the external static pressure is determined as 30Pa, when the instructed air volume is 13 m³/min, the DC fan motor 12 is to be revolved at 1030 rpm by Uhi2 tap. Similarly, when the instructed air volume is 9 m³/min, the DC fan motor 12 is revolved by the Me tap at 760 rpm.

According to the above-described configuration, the present embodiment achieves the following working effect.
When the above-described duct-type air conditioner 1 is operated, the DC fan motor 12 is driven, and the in-room air is sucked through the air inlet grille 3, the noise reduction chamber 4 and the air inlet duct 5 into the unit body 2. The air is subjected to heat exchange in the inside heat exchanger 11 with the refrigerant delivered from the outside unit, and cooled or heated. Then, the air is blown into a room through the air outlet duct 6, the air outlet unit 7 and the air outlet grille 8 for air-conditioning the inside of the room.

In such a duct-type air conditioner 1, since the stack loss varies according to the length, diameter, the shape, or the like, of the air outlet duct 6, and the blow-off air volume varies according to the magnitude of the external static pressure determined thereby, it is necessary to achieve rated air volume regardless of the state of the external static pressure, by adjusting the air volume upon installation of the air conditioner 1.

Therefore, in the present embodiment, at the installation of the air conditioner 1, the DC fan motor 12 is driven with two predefined rotational speeds A rpm and B rpm by the air volume adjustment circuit 25; while driving, the motor output values, in other words, the rotational speed instruction voltages VspA, VspB, output from the motor control circuit 22 side to the DC fan motor, are read; and by the unit itself determines the external static pressure from the difference ΔVsp between the motor output values VspA and VspB; and the rotational speed of the DC fan motor 12 is set so that the rated air volume is achieved based on the external static pressure and according to the rotational speed table 31 for each static pressure setting.

More specifically, the DC fan motor 12 is driven with two predefined rotational speeds A rpm and B rpm by the instruction from the driving instruction means 26, and the rotational speed instruction voltages VspA, VspB, which are the output values from the controller 21 to the DC fan motor 12 at that time, are read, and the difference ΔVsp between the output values are calculated by the calculation means 27, and the external static pressure is determined based on the determination table 31 and from the value ΔVsp by the determination means 28, and by setting the rotational speed of the DC fan motor 12 so as to achieve the rated air volume by the rotational speed setting means 29 and according to the rotational speed table 32 for each static pressure setting, based on the external static pressure. This allows rapidly performing the air volume adjustment.

As described above, according to the present embodiment, it is possible to drive the air conditioner 1 with the instructed air volume being secured and prevent performance decline caused by the reduction in the air volume where the external static pressure is high and a draft caused by increase in the air volume where the external static pressure is low. Moreover, since the present embodiment is configured so that the external static pressure is determined from the difference ΔVsp between the motor output values VspA, VspB at the two rotational speeds A rpm and B rpm, it is possible to absorb variations in the voltage of the circuit components, the power supply voltage, the motor output value, or the like, at the controller 21 side, thereby allowing accurately adjusting the air volume. That is, it is possible to rapidly and accurately adjust the air volume with the external static pressure so that the rated air volume is achieved, by determining, by unit itself, the external static pressure that varies according to the length, diameter, shape, or other factors, of the air outlet duct 6.

Further, the present embodiment is configured as follows: the output values output from the motor control circuit 22 to the DC fan motor 21 are determined to be the rotational speed instruction voltages VspA and VspB; the calculation means 27 reads the rotational speed instruction voltages VspA and VspB and calculates the difference ΔVsp therebetween; the determination means 28 determines the external static pressure from ΔVsp calculated by the calculation means 27 based on the determination table 31; the rotational speed setting means 29 has a function to set the rotational speed of the DC fan motor 12 from the rotational speed table 32 for each static pressure setting based on the external static pressure.

Therefore, it is possible, at normal operation, to read the rotational speed instruction voltages VspA and VspB at rotational speeds A rpm and B rpm that are of the same setting points as the output values (instruction values) output to the DC fan motor 12 from the motor control circuit 22, calculate the difference ΔVsp therebetween, and from the value, determine by the unit itself the external static pressure that varies in response to the air outlet duct 6 or other elements, and based on the external static pressure, set the rotational speed of the DC fan motor 12 corresponding thereto.
Therefore, it is not necessary to repeat driving by increasing and decreasing the applied voltage, and it is possible to comparatively easily and rapidly determine the external static pressure, and accurately adjust the air volume so as to achieve the rated air volume with the external static pressure.

The present invention is not limited to that described in the above-described embodiment, and can be appropriately modified within an extent not to depart from the gist of the present invention. For example, although in the above-described embodiment, an example in which a sirocco fan is used as a DC fan motor 12 is explained, the DC fan motor 12 is not limited to this. Of course, to any other fans, such as propeller fans, the present invention may also be applicable. Furthermore, the air outlet duct 6, the air outlet unit 7 and the air outlet grille 8, and the like can have any shape or structure, and not specified in particular ones.

Moreover, although the above-described embodiment has described a device to which the noise reduction chamber 4 and the air inlet duct 5 are connected to the air inlet side of the unit body 2, of course, the present invention is applicable also to an air conditioner 1 in which an air inlet is provided on the lower face of the unit body 2, and the in-room air is directly sucked into the unit body 2 from the air inlet. Furthermore, although in the above-described embodiment, the output value (instruction value) output from the motor control circuit 22 to the DC fan motor 12 is determined as the rotational speed instruction voltage Vsp, the rotational speed instruction voltage Vsp should not necessarily be adopted, and any other instruction values may also be used.

### {Reference Signs List}

- 1:: Air conditioner
- 2:: Unit body
- 6:: Air outlet duct
- 11:: Inside heat exchanger
- 12:: DC fan motor
- 20:: DC motor
- 21:: Controller (control substrate)
- 22:: Motor control circuit
- 23:: Driving circuit
- 24:: Rotational speed detection circuit
- 25:: Air volume adjustment circuit
- 26:: Driving instruction means
- 27:: Calculation means
- 28:: Determination means
- 29:: Rotational speed setting means
- 30:: Storage means
- 31:: Determination table
- 32:: Rotational speed table for each static pressure setting
- Vsp:: Rotational speed instruction voltage (motor output value)

## Claims

1. An air volume adjustment device for an air conditioner (1) of a type in which a heat exchanger and a DC fan motor (12) are housed in a unit body (2) and air whose temperature is controlled in the heat exchanger is blown into a room through an air outlet duct (6) connected to the unit body (2), the air volume adjustment device being **characterized in that** it comprises:
an air volume adjustment circuit (25) configured to:
drive the DC fan motor (12) at two predefined rotational speeds; read, while driving, a motor output value output from a motor control circuit (22) side to the DC fan motor (12);
determine an external static pressure from a difference between motor output values at the two rotational speeds, and
set a rotational speed of the DC fan motor (12) so that a rated air volume is achieved based on the external static pressure and from a rotational speed table for each static pressure setting.

2. The air volume adjustment device according to claim 1, wherein the air volume adjustment circuit (25) comprises:
driving instruction means 126) that drives the DC fan motor (12) at two predefined rotational speeds A and B;
calculation means (27) that reads the motor output value output from the motor control circuit (22) to the DC fan motor (12) according to the instruction from the driving instruction means (26) and calculates a difference between the motor output values;
determination means (28) that determines an external static pressure based on a determination table (31) and from the difference between the motor output values calculated by the calculation means (27);
rotational speed setting means (29) that sets the rotational speed of the DC fan motor (12) based on the external static pressure and from the rotational speed table for each static pressure setting (32) so that the rated air volume is achieved; and
storage means (30) that stores data including the determination table (31) and the rotational speed table for each static pressure setting (32).

3. The air volume adjustment device according to claim 2, wherein the output value output from the motor control circuit (22) to the DC fan motor (12) is determined to be rotational speed instruction voltages VspA and VspB, and the calculation means (27) reads the rotational speed instruction voltages VspA VspB and calculates a difference ΔVsp therebetween, and the determination means (31) determines an external static pressure based on ΔVsp calculated by the calculation means (27), and the rotational speed setting means has a function to set the rotational speed of the DC fan motor (12) based on the external static pressure and from the rotational speed table for each static pressure setting (32).
